# NEW EUROPEAN PATENT SPECIFICATION

(11) **EP 1 831 019 B2**
(45) Date of publication and mention of the opposition decision: **09.03.2016**
(45) Mention of the grant of the patent: 10.10.2012
(21) Application number: 05808046.6
(22) Date of filing: 22.11.2005
(51) Int. Cl.: B32B 27/34, B32B 27/08, B32B 27/32

(54) **MULTILAYER POLYMER STRUCTURE**
MEHRSCHICHTSTRUKTUR AUS KUNSTSTOFF
STRUCTURE POLYMERE MULTICOUCHE

(30) Priority: 24.11.2004 US 630205 P; 22.08.2005 EP 05107690
(43) Date of publication of application: 12.09.2007
(73) Proprietor: Solvay Specialty Polymers USA, LLC., Alpharetta, GA 30005 (US)
(72) Inventor: BUSHELMAN, Corinne, CUMMING, GA 30040 (US); DOTY, James, K., ALPHARETTA, GA 30022 (US); DE CANNIERE, Jean, B-1180 BRUSSELS (BE); DEHENNAU, Claude, B-1410 WATERLOO (BE); COLLARD, Marie-Paule, B-1800 VILVOORDE (BE)
(74) Representative: Vande Gucht, Anne
(86) International application number: PCT/EP2005/056158
(87) International publication number: WO 2006/056574

(56) References cited:
- EP-A- 0 685 674
- EP-A1- 1 186 237
- EP-A1- 1 741 553
- WO-A-2005/078327
- WO-A1-2005/018891
- FR-A- 2 766 548
- US-A1- 2004 096 610

## Description

The present invention is directed to a multilayer polymer structure, to a process for the manufacture of said multilayer polymer structure, to a shaped article comprising said multilayer polymer structure and to a process for the manufacture of said shaped article.

It is known that bulk polyolefins like ethylene based polymers are relatively cheap thermoplastic materials, showing very good mechanical properties, dimensional stability and processability. Nevertheless such materials are characterized by poor barrier properties towards different types of chemical compounds (e.g. hydrocarbons, fuels, gases like oxygen, vapours like water vapour). That makes them unsuitable for certain applications like, for instance, fuel tanks, automotive fuel lines, food packaging, clean air ducts, etc.

Prior art technical solutions which aim at limiting, at least to some extent, this problem consist in incorporating a barrier layer of poly (ethylene-vinyl acetate) or aliphatic polyamide within a multilayer polyolefin (e.g. polyethylene) based structure.

FR 2766548 discloses fluid transfer pipes useful for car applications, comprising at least one internal layer of a polyphthalamide-based thermoplastic material and an external layer of rubber or elastomer. A specific pipe structure disclosed in FR'548 comprises an internal polyphthalamide-based layer and an external layer comprising a rubber or a vulcanized elastomer. FR' 48 further discloses that the impact resistance of the polyphthalamide layer can be improved by the addition of an elastomer. An additional intermediate layer of adhesive can be present between the polyphthalamide layer and the rubber layer.

However, for certain demanding applications, there is still a need for new multilayer polyolefin based structures having improved performance level as compared to the above mentioned prior art structures. Notably, there is a need for improved multilayer polyolefin based structures having still better barrier behavior, higher dimensional stability, lower delamination tendency, higher mechanical strength, higher chemical stability and improved constancy of overall performance on aging.

Furthermore, it would be highly desirable that above mentioned improved multilayer polyolefin based structures be obtainable by a process more attractive than prior art manufacturing processes comprising coating, extrusion coating and/or adhesive lamination. In particular, such process should be more suited than prior art processes, notably for the manufacture of multilayered shaped articles as complex and/or diversified as multilayered film in flat form and/or in tubing form (e.g. automotive fuel lines or hoses, vapor lines, heat exchanger tubings), and multilayered hollow-bodies, especially those having very complex cross-sectional configuration like fuel tanks.

While it is true that some prior art multilayer polyolefin based structures have already been manufactured by co-extrusion, the viability of such process in the case of new multilayer structures comprising a polyolefin and polymers different from those already used in the art is highly unpredictable.

This is due to the fact that, generally speaking, the success of any co-extrusion process depends not only on the design of the die and the way how the individually extruded melts are brought together, but also on the selection of the polymers forming the various layers of the multilayer structure. As regard to multilayer polyolefin based structures, it was observed that inadequate co-extrusion parameters and/or inadequate selection of the polymer layers resulted in various problems, including for instance delamination due to weak inter-layer adhesion, partial degradation of the polyolefin layer especially at high temperature, low dimensional stability of the multilayer structure at the output of the die due to the insufficient melt strength of the polyolefin especially at high temperature, unacceptable surface quality, unstable and/or poorly reproducible operating conditions.

The present invention aims at meeting most of, if not all, the above described needs and overcoming most of, if not all, the above described problems.

### DESCRIPTION OF THE DRAWINGS

Figure 1. Modular co-Extrusion Cylindrical Die
Figure 2. Co-Extrusion Device Setup
Figure 3. Die Temperature Zones

### DESCRIPTION OF THE INVENTION

The present invention is directed to a multilayer structure comprising at least one couple of adjacent layers (L1-L2), characterized in that:
■ layer (L1) comprises at least one polymer composition (C1) comprising at least one semi-crystalline polyphthalamide and at least 5 wt% based on the total weight of polymer composition (C1) of at least one impact modifier (I1), and
■ layer (L2) comprises at least one polymer composition (C2) comprising at least one functionalized polyolefin (FP02), said functionalized polyolefin comprising functional groups chosen from carboxylic groups, their esters, their anhydrides and their salts, as defined in Claim 1.

In a certain embodiment of the present invention, the invented multilayer structure further comprises at least one layer (L3), adjacent to layer (L2), comprising at least one polymer composition (C3) comprising at least one unfunctionalized polyolefin (P03).

In a certain other embodiment of the present invention, the invented multilayer structure further comprises at least one layer (L4), adjacent to layer (L1), comprising at least one polymer composition (C4) comprising at least one aromatic polyamide and at least one impact modifier (I4).

The present invention is also directed to a process for manufacturing the invented multilayer structure, said process being characterized in that it comprises co-extruding polymer compositions (C1) and (C2), so as to obtain couple (L1-L2) of adjacent layers (L1) and (L2).

The present invention is also directed to a shaped article characterized in that it comprises the invented multilayer structure and to a process for manufacturing the shaped article, said process being characterized in that it comprises co-extruding polymer compositions (C1) and (C2), so as to obtain couple (L1-L2) of adjacent layers (L1) and (L2).

### The Multilayer structure.

The invented multilayer structure comprises at least one couple (L1-L2) of adjacent layers (L1) and (L2). Examples of multilayer structures comprising at least one couple (L1-L2) of adjacent layers (L1) and (L2) include :
■ bilayer structures comprising (L1) and (L2) as sole layers, in which (L1) can be either the innermost or the outermost layer,
■ multilayer structures with more than two layers, comprising no more than one couple (L1-L2) and at least one additional layer, in particular trilayer structures in which the additional layer can be the innermost layer or the outermost layer.

It is sometimes preferred that the invented multilayer structure further comprises at least one layer (L3) as previously defined. Examples of multilayer structures comprising at least one triplet (L1-L2-L3) include :
■ trilayer structures comprising (L1), (L2) and (L3) as sole layers, in which (L1) can be either the innermost or the outermost layer,
■ multilayer structures with more than three layers, comprising no more than one triplet (L1-L2-L3) and at least one additional layer, in particular tetralayer structures in which the additional layer can be the innermost layer or the outermost layer.

It is also sometimes preferred that the invented multilayer structure further comprises at least one layer (L4) as previously defined. Examples of multilayer structures comprising at least one triplet (L4-L1-L2) include :
■ trilayer structures comprising, as sole layers, (L4), (L1) and (L2), in which (L4) can be either the innermost or the outermost layer,
■ multilayer structures with more than three layers, comprising no more than one triplet (L4-L1-L2) and at least one additional layer, in particular tetralayer structures in which the additional layer can be the innermost layer or the outermost layer.

It is also sometimes preferred that the invented multilayer structure further comprises at least one layer (L3) and at least one layer (L4) as previously defined. Examples of multilayer structures comprising at least one quartet (L4-L1-L2-L3) include:
■ tetralayer structures comprising, as sole layers, (L4), (L1), (L2) and (L3), in which (L4) can be either the innermost or the outermost layer,
■ multilayer structures with more than four layers, comprising no more than one quartet (L4-L1-L2-L3) and at least one additional layer, in particular pentalayer structures in which the additional layer can be the innermost layer or the outermost layer.

Layer (L1) is preferably more inner than layer (L2); this implies notably that:
■ when the multilayer structure comprises (L1) and (L2) as sole layers, it is preferred that (L1) be the innermost layer and (L2) be the outermost layer;
■ when the multilayer structure comprises no other layer than those of triplet (L1-L2-L3), it is preferred that (L1) be the innermost layer and (L2) be the intermediate layer;
■ when the multilayer structure comprises no other layer than those of triplet (L4-L1-L2), it is preferred that (L1) be the intermediate layer and (L2) be the outermost layer;
■ when the multilayer structure comprises no other layer than those of quartet (L4-L1-L2-L3), it is preferred that both (L1) and (L2) be intermediate layers and L4 be the innermost layer.

In the invented multilayer polymer structure, layer (L1) provides advantageously the multilayer structure notably with excellent chemical resistance and impermeability to fluid such as fuel, while layer (L2) provides advantageously the multilayer structure notably with strength and dimensional stability and is advantageously used as tie-layer between layer (L1) and layer (L3).

Layers (L3) and (L4), if present, are advantageously used to improve the overall performance level of the multilayer structure, in particular its mechanical strength, impermeability and its dimensional stability in order to meet the requirements of certain demanding applications.

### Layer (L1)

The physical dimensions of layer (L1) are not particularly limited.

In certain preferred embodiments of the present invention, the thickness of layer (L1) is of at least 0.05 mm, preferably of at least 0.1 mm, more preferably of at least 0.2 mm. In addition, in said preferred embodiments, the thickness of layer (L1) is smaller than 0.4 mm.

In certain other preferred embodiments of the present invention, the thickness of layer (L1) is of at least 0.4 mm. In addition, in said other preferred embodiments, the thickness of layer (L1) is of at most 2 mm, preferably of at most 1 mm, more preferably of at most 0.8 mm.

In certain still other preferred embodiments of the present invention, the thickness of layer (L1) is larger than 2 mm. In addition, in said still other preferred embodiments, the thickness of layer (L1) is preferably of at most 15 mm, more preferably of at most 10 mm, still more preferably, of at most 5 mm.

Layer (L1) comprises at least one polymer composition (C1). The weight amount of polymer composition (C1) based on the total weight of layer (L1), is advantageously of at least 10 wt.%, preferably of at least 40 wt.%, more preferably of at least 60 wt.%, still more preferably of at least 80 wt.%. Most preferably, layer (L1) consists essentially of polymer composition (C1)

Polymer composition (C1) comprises at least one semi-crystalline polyphthalamide, as defined in Claim 1.

Polyphthalamide herein is intended to denote any aromatic polyamide of which at least 35 mole % of the recurring units, based on the total number of moles of recurring units, are formed by copolymerizing at least one phthalic acid monomer with at least one aliphatic diamine monomer.

Phthalic acid monomer herein is intended to denote anyone of ortho-phthalic acid, isophthalic acid, terephthalic acid or mixtures thereof.

The aliphatic diamine monomer is advantageously a C₃-C₁₂ aliphatic diamine, preferably a C₆-C₉ aliphatic diamine, and more preferably, is hexamethylenediamine.

Polyphthalamides are commercially available as AMODEL^{®} polyamides from Solvay Advanced Polymers, L.L.C..

The polyphthalamide is a polyterephthalamide.

Polyterephthalamide herein is intended to denote a polyphthalamide of which at least 35 mole % of the recurring units, based on the total number of moles of recurring units, are formed by copolymerizing terephthalic acid with at least one aliphatic diamine (hereafter "terephthalamide units").

The polyphthalamide is a polyterephthalamide formed by copolymerizing terephthalic acid monomer, isophthalic acid monomer and at least one aliphatic dicarboxylic acid monomer, preferably adipic acid, with at least one aliphatic diamine monomer.

The polyterephthalamide comprises more than 55 mole % of terephthalamide units, based on the total number of moles of recurring units. The polyterephthalamide comprises at most 75 mole % and, more preferably, at most 70 mole % of terephthalamide units.

Besides, , the polyterephthalamide further comprises at least 5 mole % and, more preferably, at least 15 mole % of recurring units formed by condensation reaction of isophthalic acid monomer with an aliphatic diamine monomer (hereafter "isophthalamide units"), based on the total number of moles of recurring units. The polyterephthalamide comprises at most 40 mole % of isophthalamide units.

Besides, the polyterephthalamide further comprises at least 1 mole % and, more preferably, at least 3 mole % of recurring units formed by condensation reaction of aliphatic diacid monomer with an aliphatic diamine monomer (hereafter "aliphatic diacid-amide units"), based on the total number of moles of recurring units. The polyterephthalamide comprises at most 20 mole %, and more preferably at most 10 mole % of aliphatic diacid-amide units.

Polyterephthalamides complying with theses features are notably commercially available as AMODEL^{®}A-1000 polyamides from Solvay Advanced Polymers, L.L.C.

The polyphthalamide has a melting temperature of at most 325°C, more preferably of at most 320°C, and still more preferably of at most 315°C. In addition, the melting temperature is at least 310°C.

The melting temperature of the polyphtahalamide can be measured by any technique known in the art; very often, it is measured by Differential Scanning Calorimetry. Precisely, Universal V3.7A Instruments DSC calorimeter was used by the Applicant to measure the melting temperature of the polyphthalamide.

For this purpose, it was preliminarily checked that the calorimeter was well-calibrated by means of a calibration sample. Then, the polyphthalamide of which the melting temperature had to be measured was submitted to the following heating/cooling cycle : 1^{st} heating from room temperature up to 350°C at a rate of 10°C/min, followed by cooling from 350°C down to room temperature at a rate of 20°C/min, followed by 2^{nd} heating from room temperature up to 350°C at a rate of 10°C/min.

The melting temperature was measured during 2^{nd} heating. Melting is an endothermic first-order transition that appears as a negative peak on the DSC scan.

The melting temperature is advantageously determined by a construction procedure on the heat flow curve: the intersection of the two lines that are tangent to the peak at the points of inflection on either side of the peak define the peak temperature, namely the melting temperature.

The weight amount of the polyphthalamide in polymer composition (C1), based on the total weight of polymer composition (C1), is of at least 50 wt.% preferably of at least 65 wt.%, and more preferably of at least 70 wt.%. In addition, the weight amount of the polyphthalamide is of at most 95 wt.%, preferably of at most 90 wt.%, more preferably of at most 80 wt.%. Polymer composition (C1) further comprises at least one impact modifier (II).

Impact modifier (I1) can be elastomeric or not. Suitable impact modifiers are not particularly limited, so long as they impart useful mechanical properties to polymer composition (C1), such as sufficient tensile elongation at yield and break. Advantageously, impact modifier (I1) further improves the processability of composition (C1), notably its aptitude to be co-extruded.

Impact modifier (I1) is preferably elastomeric.

Examples of elastomeric impact modifiers are ethylene (Ee) / 1-octene (1Oe) copolymers, propylene (Pe) / 1Oe copolymers, Ee /Pe / 1Oe terpolymers, Ee / 1-butene (1Be) /1Oe terpolymers, Pe /1Be /1Oe terpolymers, Ee /1Oe / 1-pentene terpolymers, Ee / 10e / styrene terpolymers, Ee / 1Oe / acrylonitrile terpolymers, Ee / 1Oe / methylacrylate terpolymers, Ee / 1Oe / vinyl acetate terpolymers, Ee / 1Oe / methyl methacrylate terpolymers, Pe / 1Oe / styrene terpolymers, Pe / 1Oe / acrylonitrile terpolymers, Pe / 1Oe / methylacrylate terpolymers, Pe / 1Oe / vinyl acetate terpolymers, Pe / 1Oe / methyl methacrylate terpolymers, Ee / 1Oe / 1,4-hexadiene terpolymers, Pe / 1Oe / 1,4-hexadiene terpolymers, Ee / 1Oe / ethylidenenorbomene terpolymers, Pe / 1Oe /ethylidenenorbomene terpolymers, Ee / Pe copolymers (commonly known as "EPR rubbers"), chlorosulphonated Ee polymers ("PE rubber"), Ee / Pe / diene terpolymers ("EPDM rubbers") like for example Ee / Pe / 1,4-hexadiene terpolymers and Ee / Pe / ethylidene norbornene terpolymers, butadiene rubbers (cis-1,4-polybutadiene), butyl rubbers like isobutylene-isoprene rubber, nitrile butadiene rubbers, styrene-butadiene rubbers, styrene-Ee-butadiene-styrene rubbers where butadiene may be hydrogenated or not, Ee-acrylic cross-linked rubbers (copolymers of ethylene with methyl methacrylate), natural rubber (cis-1,4-polyisoprene), chloroprene rubbers or neoprene (trans-1,4-polychloroprene), polyethers like epichlorohydrin elastomers and propylene oxide elastomers, polypentenamers such as polycyclopentene, thermoplastic urethane elastomers and mixtures thereof.

Impact modifier (I1) is more preferably an elastomer obtained by copolymerizing Ee with at least one higher alpha-olefin, and optionally in addition at least one diene.

Impact modifier (I1) is still more preferably chosen from elastomeric Ee / 1Oe copolymers, EPR rubbers, EPDM rubbers, and mixtures thereof.

Good results were obtained when impact modifier (I1) was an EPDM rubber. Good results were also obtained when impact modifier (I1) was a mix of an elastomeric Ee / 1Oe copolymer with an EPDM rubber.

Impact modifier (11) may be grafted (GI1) or not (UGI1). All the above cited impact modifiers should herein be considered as specifically disclosed both in their grafted and in their ungrafted form.

When impact modifier (I1) consists of one compound, it is preferably grafted. When impact modifier (I1) consists of a plurality of compounds, preferably at least one of them is grafted.

Grafted impact modifier (GI1) is usually obtained by grafting at least one grafting agent (G1) onto an ungrafted impact modifier (UGI1).

Grafting agent (G1) is advantageously chosen from ethylenically unsaturated carboxylic acids, their esters, their anhydrides and their salts.

Grafting agent (G1) is preferably chosen from compounds with at most two carboxylic groups. More preferably, grafting agent (G1) further comprises from 3 to 20 carbon atoms, like acrylic acid, methacrylic acid, maleic acid, fumaric acid, itaconic acid, crotonic acid, citraconic acid, maleic anhydride, succinic anhydride, itaconic anhydride, crotonic anhydride, citraconic anhydride and mixtures thereof. Still more preferably, grafting agent (G1) is chosen from maleic anhydride, succinic anhydride, acrylic acid, methacrylic acid, maleic acid, succinic acid and mixtures thereof. The most preferably, grafting agent (G1) is maleic anhydride.

When ethylenically unsaturated carboxylic acids and/or their anhydrides are grafted onto an ungrafted impact modifier, the resulting grafted carboxylic acids and/or anhydride groups can be left unchanged ; the case being, the grafted impact modifier (GI1) is one with grafted carboxylic acid and/or anhydride groups. They can also be subsequently reacted, in particular they can be partially or completely neutralized by one or more metallic neutralizing agents ; the case being, grafted impact modifier (GI1) is one with partially or completely neutralized grafted carboxylic acid and/or anhydride groups.

The weight amount of grafting agent (G1), based on the total weight of grafted impact modifier (GI1), is advantageously of at least 0.01 wt.%, preferably of at least 0.01 wt.% and more preferably of at least 0.05 wt.%. In addition, it is advantageously of at most 5.0 wt.%, preferably of at most 1.0 wt.% and more preferably of at most 0.5 wt.%.

The grafting of grafting agent (G1) may be accomplished by techniques known in the art.

Commercially available grafted elastomeric polyolefins are, for example, maleated Ee-Pe copolymers such as EXXELOR^{®} VA 1801 from the Exxon Mobil Chemical Company, EXXELOR^{®} MDEX 94-11-2 from the Exxon Mobil Chemical Company, maleated Ee-Pe-diene terpolymers such as ROYALTUF^{®} 498 available from the Crompton Corporation and maleated Ee-1Oe copolymers such as FUSABOND^{®} 493D available from the Du Pont Company. Other commercially available grafted elastomers are acrylic or acrylate-modified polyethylene rubbers such as SURLYN^{®} 9920 available from the DuPont Company and maleic anhydride-modified styrene-Ee-butylene-styrene block copolymer such as KRATON^{®} FG1901X available from Kraton Polymers.

The amount of impact modifier (I1) is advantageously sufficient to impart notably desirable mechanical characteristics (e.g. tensile elongation at yield and break) and processability to polymer composition (C1).

The weight amount of the impact modifier (I1), based on the total weight of polymer composition (C1), is of at most 35 wt.%, and still more preferably of at most 30 wt.%. In addition, it is at least 5 wt.%, more preferably of at least 10 wt.%, and most preferably of at least 20 wt.%. X

Optionally, polymer composition (C1) further comprises one or more additives like lubricants, pigments, antioxidants, heat stabilizers, fillers, dyes, flame retardants, plasticizers, mold release agents and light stabilizers, and polyamides other than the semi-crystalline polyphthalamide. Said additives may be employed alone or in any combination. The levels of such additives can be determined for the particular use envisioned by one of ordinary skill in the art in view of this disclosure ; very often, it does not exceed 10 wt. %; often, it is below 5 wt. %.

Examples of preferred lubricants useful for polymer composition (C1) are metallic stearates, polytetrafluoroethylene (PTFE), low density polyethylene, metal sulfides such as MoS₂, graphite, boron nitride and mixtures thereof. More preferably, the lubricant comprises a PTFE and still more preferably, it comprises a non fibrillating PTFE, such as POLYMIST^{®} F5A available from Solvay Solexis SpA. The weight amount of lubricant, based on the total weight of polymer composition (C1) ranges preferably from 0.10 wt. % to 1.0 wt. %.

Antioxidants possibly useful as ingredients of polymer composition (C1) are notably sterically hindered amines, sterically hindered phenols, phosphites, phosphonites, thiosynergists, and mixtures thereof. Antioxidants are often used in a weight amount ranging from 0.10 wt. % to 1.0 wt. %, based on the total weight of polymer composition (C1).

Colorants possibly useful as ingredients of polymer composition (C1) are notably pigments like carbon black and dyes like nigrosine. Pigments are often used in a weight amount ranging from 0.01 wt. % to 1.0 wt. %, based on total weight of polymer composition (C1).

In certain embodiments of the present invention polymer composition (C1) further comprises at least one lubricant, at least one antioxidant and at least one pigment.

Heat stabilizers possibly useful as ingredients of polymer composition (C1) are notably copper-based stabilizers comprising a copper compound soluble in the polyamide and an alkali metal halide. Examples thereof are mixtures of copper iodide and/or copper bromide with an alkali bromide and/or iodide.

Fillers possibly useful as ingredients of polymer composition (C1) are notably glass fibers, carbon fibers, graphite fibers, silicon carbide fibers, aramide fibers, wollastonite, talc, mica, titanium dioxide, potassium titanate, silica, kaolin, chalk, alumina, boron nitride, aluminum oxide. Fillers improve possibly notably mechanical strength (e.g. flexural modulus) and/or dimensional stability and/or friction and wear resistance.

Polyamides other than the semi-crystalline polyphthalmide possibly useful as ingredients of polymer composition (C1) are notably aliphatic polyamides. An aliphatic polyamide is herein intended to denote a polyamide of which more than 85 mole % of the recurring units are aliphatic. Examples of aliphatic polyamides include nylon 6,6, nylon 6,10, nylon 11, nylon 6, and nylon 12.

Semi-crystalline polyphthalamide, impact modifier (I1) and optional additives may be mixed together in any manner known in the art. Mixing may be done preliminary to co-extrusion in a separate extruder or it may be done immediately before co-extrusion in the same extruder used to feed the co-extrusion die.

### Layer L2

Preferred physical dimensions of layer (L2) and weight amounts of polymer composition (C2) in layer (L2) are the same as those previously described for layer (L1) and composition (C1), at any level of preference.

According to the present invention, composition (C2) comprises at least one functionalized polyolefin (FPO2), said functionalized polyolefin comprising functional groups chosen from carboxylic groups, their esters, their anhydrides and their salts.

Polyolefin is intended to denote any (co)polymer of which at least 50 mole % of the recurring units are derived from at least one olefin. Olefin is inteded to denote an usaturated hydrocarbon comprising at least one carbon-carbon double bond.

Examples of olefins are for instance: ethylene; propylene; 1-propene; 1-butene; 2-butene; 1,3-butadiene; 1-pentene; isoprene; 1,5-hexadiene; cycloolefins like for example norbornene, cyclopentene, cyclohexene; styrene and alkyl substituted styrenes; divinylbenzene, etc.

Functionalized polyolefin (FP02) can be obtained by any technique known in the art, for example, by copolymerizing at least one olefin with at least one ethylenically unsaturated monomer bearing at least one suitable functional group or by grafting at least one grafting agent onto at least one unfunctionalized polyolefin (P02).

Preferably, functionalized polyolefin (FPO2) is obtained by grafting at least one grafting agent (G2) onto an unfunctionalized polyolefin (P02). Any unfunctionalized polyolefin (P02) is suitable, including homopolymers, copolymers and/or mixtures thereof.

Preferably, unfunctionalized polyolefin (PO2) is obtained by polymerizing olefins chosen from the group of linear olefins comprising from 2 to 6 carbon atoms (such as ethylene, propylene, 1-butene, 1-hexene, 1-pentene and their isomers). More preferably, unfunctionalized polyolefin (P02) comprises at least 80 wt.% of ethylene recurring units with respect to the total weight of the recurring units. In this case, (PO2) is herein also called "ethylene based polymer".

Standard density of (PO2) is advantageously of at least 935 kg/m³ and, preferably of at least 940 kg/m³. In addition, standard density is advantageously of at most 961 kg/m³ and preferably of at most 957 kg/m³. Standard density was measured according to ISO standard 1183.

Melt flow index MI5 of (P02) is advantageously of at least 1 dg/min and, preferably of at least 4 dg/min. In addition, MI5 is advantageously of at most 100 dg/min, preferably of at most 50 dg/min and, more preferably of at most 20 dg/min. MI5 was measured at 190°C under a load of 5 kg through a 8/2 mm die, according to ISO standard 1183.

Melt flow index MI2 of (PO2) is advantageously of at least 0.1 dg/min, preferably of at least 1.0 dg/min, more preferably of at least 1.2 dg/min. In addition, MI2 is advantageously of at most of 4.0 dg/min, preferably of at most 3.0 dg/min, more preferably of at most 2.5 dg/min. MI2 was measured at 190°C under a load of 2.16 kg through a 8/2 mm die, according to ISO standard 1183.

Number average molecular weight (Mn) of (P02) is advantageously of at least 10000 and, preferably of at least 15000. In addition, Mn is advantageously of at most 70000 and preferably, of at most 40000.

Weight average molecular weight (Mw) of (P02) is advantageously of at least 90000 and, preferably of at least 105000. In addition, Mw is advantageously of at most 210000 and preferably of at most 160000.

Average molecular weight (Mz) of (P02) is advantageously of at least 250000 and preferably, of at least 300000. In addition, Mz is advantageously of at most 600000, and preferably of at most 500000.

Polydispersity (Mw/Mn) of (PO2) is advantageously of at most 9.0 and, preferably of at most 7.0. In addition, Mw/Mn is advantageously of at least 3.0 and, preferably of at least 4.0.

In certain embodiments, (P02) comprises copolymerized recurring units derived from ethylene, 1-butene and 1-hexene.

In certain other embodiments, (P02) is a copolymer of ethylene with 1-butene.

The weight amount of recurring units derived from copolymerized alphaolefins with respect to the total weight of the recurring units is advantageously of at least 0.5 wt.%, and preferably of at least 1.5 wt.%. In addition, it is preferably of at most 10 wt.%.

Ethylene based polymers useful as unfunctionalized polyolefins (P02) are notably commercially available under the trade name PE ELTEX^{®} grades from BP SOLVAY POLYETHYLENE.

Grafting agent (G2) is advantageously chosen from the same group of compounds as those previously described in the case of (G1), at any level of preference.

When (FPO2) is obtained by grafting ethylenically unsaturated carboxylic acids and/or their anhydrides onto (P02), the resulting grafted carboxylic acids and/or anhydride groups can be left unchanged or they can be subsequently reacted, in particular they can be partially or completely neutralized by one or more metallic neutralizing agents. Preferably, the resulting grafted carboxylic acids and/or anhydride groups are left unchanged.

The weight amount of grafting agent (G2) based on the total weight of (FP02) is advantageously of at least 0.01 wt.%, and preferably of at least 0.05 wt.%. In addition, the weight amount is advantageously of at most 4.0 wt.% and preferably of at most 0.8 wt.%.

The grafting of grafting agent (G2) may be accomplished by any technique known in the art.

In certain embodiments of the present invention, functionalized polyolefin (FP02) is an ethylene based polymer grafted by maleic anhydride.

Standard density of (FP02) is advantageously of at least 935 kg/m³ and preferably of at least 940 kg/m³. In addition, standard density is advantageously of at most 960 kg/m³ and preferably of at most 955 kg/m³. Standard density was measured according to ISO standard 1183.

Melting temperature of (FP02) is of at least 120°C and preferably of above 125°C. In addition, melting temperature is advantageously of below 140°C, and preferably of at most 135°C. Melting temperature was measured according to ISO 11357.

Crystallization temperature of (FPO2) is advantageously of at least 100°C, and preferably of at least 110°C. In addition, crystallization temperature is advantageously of at most 130°C, and preferably of at most 120°C. Crystallization temperature was measured according to ISO 11357.

Melt flow index MI5 of (FP02) is advantageously of at least 0.01 dg/min and preferably of at least 0.05 dg/min. In addition, MI5 is advantageously of at most 10 dg/min, and preferably of at most 1 dg/min. MI5 was measured at 190°C under a load of 5 kg through a 8/2 mm die, according to ISO standard 1133.

High low melt flow index HLMI of (FP02) is advantageously of at least 1 dg/min, and preferably of at least 5 dg/min. In addition, HLMI is advantageously of at most of 50 dg/min, preferably of at most 25 dg/min, and more preferably of at most 15 dg/min. HLMI was measured at 190°C under a load of 21.6 kg through a 8/2 mm die.

Polymer composition (C2), likewise (C1), optionally further comprises one or more additives like those previously described for (C1). Such additives may be present in amounts which are advantageously the same as those previously described for (C1), at any level of preference.

Preferably, polymer composition (C2) further comprises at least one antioxidant. Addition of at least one antioxidant may be useful to improve thermal and chemical stability of polymer composition (C2) as well as long-term adhesion behavior of layer (L2).

Other antioxidants which may be added to polymer composition (C2), besides those previously mentioned for (C1), are for example phenolic antioxidants comprising one or more sterically hindered phenol groups and free from an ester group, or mixtures thereof.

Among these antioxidants mention may be made of: 1,1,3-tris(2-methyl-4-hydroxy-5-t-butylphenyl) butane; 2,2'-isobutylidenebis (4,6-dimethylphenol); 2,2'-methylenebis (6-t-butyl-4-methylphenol); 2,6-bis(a-methylbenzyl)-4-methylphenol; 4,4'-thiobis-(6-t-butyl-m-cresol); 2,2'-methylenebis(4-methyl-6-nonylphenol); 1,3,5-trimethyl-2,4,6-tris (3,5-di-t-butyl-4-hydroxybenzyl)benzene.

More preferably, polymer composition (C2) further comprises 1,3,5-trimethyl-2,4,6-tris(3,5-di-t-butyl-4-hydroxy-benzyl)benzene as sole antioxidant. 1,3,5-Trimethyl-2,4,6-tris(3,5-di-t-butyl-4-hydroxybenzyl) benzene is commercially available, as Irganox^{®}1330, from Ciba.

### Optional Layer (L3)

Preferred physical dimensions of layer (L3) and weight amounts of polymer composition (C3) in layer (L3) are the same as those previously described for layer (L1) and composition (C1), at any level of preference.

Unfunctionalized polyolefin (P03), likewise (P02), is any possible olefin homopolymer, copolymer or mixture thereof. (P03) comprises the same preferred copolymerized recurring units previously described for (P02) and in the same preferred relative amounts, at any level of preference.

Likewise (PO2), (P03) is more preferably an ethylene based polymer.

Standard density of (PO3) is advantageously of at least 915 kg/m³, preferably of at least 930 kg/m³, more preferably of at least 945 kg/m³. In addition, standard density is advantageously of at most 962 kg/m³, and preferably of at most 955 kg/m³.

Melt flow index MI5 of (P03) is advantageously of at least 0.05 dg/min, preferably of at least 0.08 dg/min and, more preferably of at least 0.1 dg/min. In addition, MI5 is advantageously of at most 5 dg/min, preferably of at most 2 dg/min and, more preferably of at most 1 dg/min.

Melt viscosity of (PO3) is advantageously of at least 1000 Pa.s, preferably of at least 1500 Pa.s, and more preferably of at least 2000 Pa.s (at share rate of 100 s⁻¹ and temperature of 190°C).

In some preferred embodiments of the present invention, unfunctionalized polyolefin (PO3) has melt flow index MI5 of at most 2 dg/min and melt viscosity of at least 2000 Pa. (at share rate of 100 s⁻¹ and temperature of 190°C).

Unfunctionalized polyolefin (P03) has advantageously narrow or broad molecular weight distribution. Preferably, it has broad molecular weight distribution.

Ethylene based polymers possibly useful as unfunctionalized polyolefins (P03) are commercially available under the trade name PE ELTEX^{®} grades from BP SOLVAY POLYETHYLENE.

Polymer composition (C3), likewise (C2), optionally further comprises one or more additives like those previously described for (C2). Such additives may be present in amounts which are advantageously the same as those previously described for (C2), at any level of preference.

### Optional Layer (L4)

Preferred physical dimensions of layer (L4) and weight amounts of polymer composition (C4) in layer (L4) are the same as those previously described for layer (L1) and composition (C1), at any level of preference.

For the purpose of the present invention an aromatic polyamide is intended to denote a polymer of which more than 15 mole % of the recurring units comprise at least one amide group (-CONH-) and at least one arylene group, such as phenylene, naphthalene and p-biphenylene.

Said recurring units can be obtained notably by (i) condensation reaction of an aromatic dicarboxylic acid monomer with an aliphatic diamine monomer, (ii) condensation reaction of an aliphatic dicarboxylic acid monomer with an aromatic diamine monomer, (iii) condensation reaction of an aromatic dicarboxylic acid monomer with an aromatic diamine monomer, (iv) auto-condensation of an aromatic amino-acid, and combinations thereof.

Ortho-phthalic acid, isophthalic acid, terephthalic acid and 2,6-naphthalene dicarboxylic acid are examples of aromatic dicarboxylic acid monomers, while meta-phenylene diamine, meta-xylylene diamine and para-xylylene diamine are examples of aromatic diamine monomers.

Adipic acid and sebacic acid are examples of suitable aliphatic dicarboxylic acid monomers, while hexamethylene diamine, methylpentamethylene diamine and nonanediamine are examples of suitable aliphatic diamine monomers.

The aromatic polyamide may further comprise recurring units consisting of at least one amide group and at least one alkylene group. Said recurring units can be obtained notably by condensation reaction of an aliphatic dicarboxy acid monomer with an aliphatic diamine monomer, or by auto-condensation of an aliphatic amino-acid.

The aromatic polyamide comprises preferably more than 15 mole %, based on the total number of moles of recurring units, of recurring units obtained by (i) condensation reaction of an aromatic dicarboxylic acid monomer with an aliphatic diamine monomer and/or (ii) condensation reaction of an aliphatic dicarboxylic acid monomer with an aromatic diamine monomer.

Besides, the aromatic polyamide comprises preferably less than 15 mole %, based on the total number of moles of recurring units, of recurring units obtained by (iii) condensation reaction of an aromatic dicarboxylic acid monomer with an aromatic diamine monomer, and (iv) auto-condensation of an aromatic amino-acid.

More preferably, the aromatic polyamide is a PMXDA, a polyphthalamide, or a mixture of a PMXDA and a polyphthalamide.

"PMXDA" is herein intended to denote an aromatic polyamide of which more than 50 mole % of the recurring units, based on the total number of moles of recurring units, are obtained by condensation reaction of an aliphatic dicarboxylic acid monomer, preferably adipic acid, with an aromatic diamine monomer, preferably meta-xylylene diamine.

PMXDAs useful for the present invention comprise preferably more than 90 mole % of recurring units obtained by condensation reaction of an aliphatic dicarboxylic acid monomer and an aromatic diamine.

PMXDAs complying with these features are notably commercially available as IXEF^{®} polyamides from Solvay Advanced Polymers, L.L.C.

Still more preferably, the aromatic polyamide is a polyphthalamide, and the most preferably, it is a polyterephthalamide.

The polyterephthalamide used for making layer (L4) complies advantageously with all the features of the polyterephthalamide used for making layer (L1) according to embodiments (E1) or (E2) of the present invention, preferably to embodiment (E1), at any level of preference.

The weight amount of aromatic polyamide in polymer composition (C4), based on the total weight of polymer composition (C4), is advantageously of at least 50 wt.% preferably of at least 65 wt.%, and more preferably of at least 70 wt.%. In addition, the weight amount of aromatic polyamide is advantageously of at most 95 wt.%, preferably of at most 90 wt.%, more preferably of at most 80 wt.%.

Polymer composition (C4) further comprises at least one impact modifier (I4). Impact modifier (I4) advantageously complies with all the features of impact modifier (I1), at any level of preference.

Polymer composition (C4), likewise (C1), optionally further comprises one or more additives like those previously described for (C1). Such additives may be present in amounts which are advantageously the same as those previously described for (C1), at any level of preference.

Aromatic polyamide, impact modifier (I4) and optional additives may be mixed together in any manner known in the art. Mixing may be done preliminary to co-extrusion in a separate extruder or it may be done immediately before co-extrusion in the same extruder used to feed the co-extrusion die.

The present invention is also directed to a process for manufacturing the multilayer structure, said process being characterized in that it comprises co-extruding polymer compositions (C1) and (C2) so as to obtain couple of adjacent layers (L1-L2), as detailed in Claim 9.

The Applicant found that the multilayer polymer structures of the invention generally have high tensile properties, high impact and tear strength.

Furthermore these multilayer polymer structures have usually better barrier properties (in particular for water, fuel and gases) than prior art multilayer structures comprising polyolefin materials (e.g. PE, LDPE, HDPE) and/or aliphatic polyamide materials (e.g. PA 6 or PA 66).

The invented multilayer structures may generally be employed for a variety of applications where prior art multilayer structures comprising aliphatic polyamide and/or polyolefins are usually employed but provide better performance.

For example, invented multilayer structures may be used for: hot water applications where low permeation and higher temperature is required, low cost vapor lines, heat exchanger tubing, high temperature fuel system applications, and particularly at higher temperatures than conventional polyamide applications, fuel tanks, insulating devices in electric motors and other electronic devices, in industrial transformers for insulators and compressor motor coil insulators, packaging, coating.

The multilayer structures according to the invention generally have excellent chemical resistance to a variety of compounds such as alcohols, esters, ketones, weak acids, aliphatic and aromatic hydrocarbons.

The present invention is also directed to a shaped article comprising the invented multilayer structure, as defined in Claim 10.

Invented shaped article is advantageously chosen from the group of flat films, tubular films, hollow bodies and sheets.

When the invented shaped article is a hollow body, said hollow body is advantageously chosen from the group of pipes, hoses, tubes, containers, fuel tanks and bottles.

Finally the present invention is directed to a process for manufacturing shaped article comprising the invented multilayer structure, as defined in Claim 12.

The invented process advantageously comprises co-extruding polymer compositions (C1) and (C2) so as to obtain couple of adjacent layers (L1-L2).

The process for manufacturing shaped article comprising the multilayer structure according to the present invention is advantageously slit-die co-extrusion, anular die co-extrusion or blow-molding co-extrusion.

Provided below is an example illustrative of the present invention, but not limitative thereof.

### Example 1

The following co-extrusion test aimed at obtaining a tubular multilayer structure composed of three layers: (L1*) [inner layer], (L2*) [intermediate layer] and (L3*) [outer layer].

The inner layer (L1*), was composed of a polymer composition (C1*) consisting of
■ 73.6 wt. % of an AMODEL^{®} polyterephthalamide grade (from Solvay Advanced Polymers L.L.C.) formed by copolymerizing terephthalic acid, isophthalic acid and adipic acid with hexamethylene diamine; containing an amount of terephthalamide units of about 65 mole %, of isophthalamide units of about 25 mole % and of adipamide units of about 10 mole % on the basis of the total number of moles of recurring units; and having a melting temperature of 315°C.
■ 25 wt. % of a maleic anhydride grafted EPDM (MA-g-EPDM) as impact modifier the rest of the composition being composed of a mixture of additives consisting of an antioxidant, a non fibrillating polytetrafluoroethylene and a pigment.

The intermediate layer (L2*), was composed of a polymer composition (C2*) consisting of
■ PRIEX^{®} 13092 polyethylene (from SOLVAY SOCIETE ANONYME), a maleic anhydride grafted high density polyethylene (MA-g-HDPE) having content of grafted maleic anhydride of 0.36 wt. %, a melt flow index MI5 of 0.2 dg/min (90°C/5kg) and containing 0.3 wt. % of an antioxidant.

The outer layer (L3*) was composed of a polymer composition (C3*) consisting of
■ ELTEX^{®} B4922 polyethylene (from BP SOLVAY POLYETHYLENE), a high density polyethylene having a melt flow index MI5 of 0.4 dg/min (190°C/5kg).

The co-extrusion equipment used to carry out this test is described hereafter.

### Co-extrusion equipment

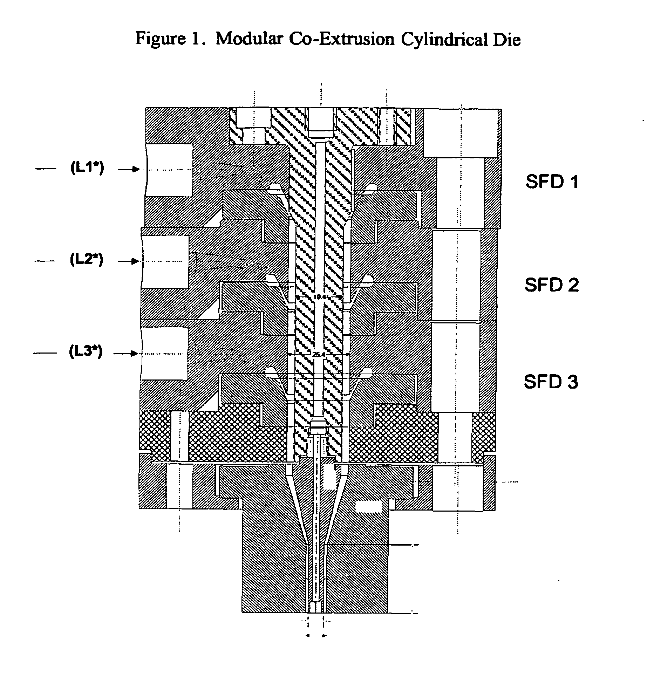

The co-extrusion equipment comprised:
■ a modular cylindrical die comprising three stacked flow distributors (SFD1, SFD2, SFD3) enabling the co-extrusion of three layers tubings with an external diameter of 8 mm and an internal diameter of 6 mm (Figure 1),
■ three single screw extruders (E1, E2, E3) having a diameter of 20 mm.

Each of the stacked flow distributors was fed by one extruder.

The extruder E was used to extrude and feed polymer composition (C1*) forming the inner layer (L1 *) to the stacked flow distributor SFD1.

The extruder E2 was used to extrude and feed polymer composition (C2*) forming the intermediate layer (L2*) to the stacked flow distributor SFD2.

The extruder E3 was used to extrude and feed polymer composition (C3*) forming the outer layer (L3*) to the stacked flow distributor SFD3.

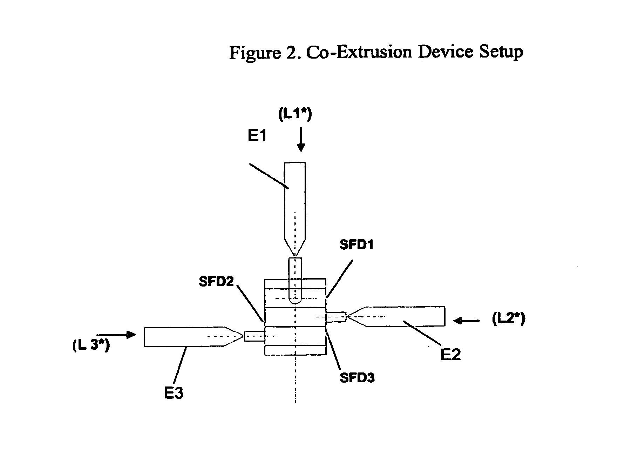

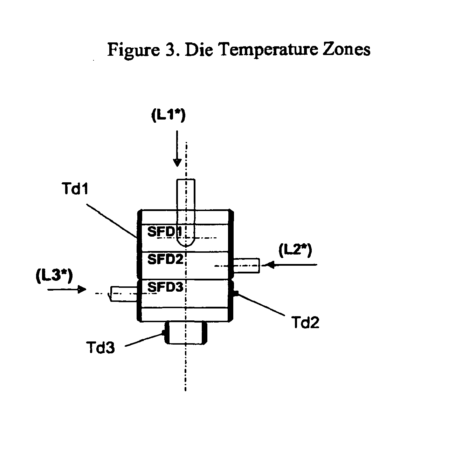

The co-extrusion setup is shown in Figure 2. The extruder E1 had two barrel temperature zones: Z1 and Z2 respectively from inlet to outlet. The extruders E2 and E3 had three barrel temperature zones: Z1, Z2 and Z3 respectively from inlet to outlet. The modular cylindrical die had three different temperature zones as shown in Figure 3. Td1 was the temperature of the stacked flow distributors SFD1 and SFD2 feeding respectively layers L1* and L2*.

Td2 was the temperature of the stacked flow distributor SFD3 feeding layer L3*.

Td3 was the temperature of the die outlet section.

### Co-extrusion of the tubular multilayer structure

The co-extrusion process parameters are shown in Table 1.

**Table 1. Materials and Process Parameters**

| Materials and Process Parameters | Example 1 |
|---|---|
| Composition of layer (L1*) (inner layer) | AMODEL^{®} polyterephthalamide + MA-g-EPDM + additives mixture |
| Extruder 1 Z1/Z2 Temperatures (°C) | 310/325 |
| Extruder 1 Throughput (g/min) | 18 |
| Composition of layer (L2*) (intermediate layer) | PRIEX^{®} 13092 polyethylene |
| Extruder 2 Z1/Z2/Z3 Temperatures (°C) | 210/260/280 |
| Extruder 2 Throughput (g/min) | 14 |
| Composition of layer (L3*) (outer layer) | ELTEX^{®} B4922 polyethylene |
| Extruder 3 Z1/Z2/Z3 Temperatures (°C) | 210/260/280 |
| Extruder 3 Throughput (g/min) | 14 |
| Die Temperatures Td1/Td2/Td3 (°C) | 325/315/310 |
| Adhesion between layers (L1*) and (L2*) on one hand and (L2*) and (L3*) on the other hand | excellent |

| | |
|---|---|
| Notes: AMODEL^{®} is a registered trademark of Solvay Advanced Polymers, L.L.C. PRIEX^{®} is a registered trademark of Solvay Société Anonyme. ELTEX^{®} is a registered trademark of BP Solvay Polyethylene. | |

During the co-extrusion of the tubular multilayer structure, the die temperatures in the three zones previously defined were: Td1=325°C, Td2=315°C, Td3=310°C. The parison at the exit of the die was calibrated and cooled using a conventional system comprising a vacuum calibrator and a water spray bath also kept under vacuum. The so-obtained tubular multilayer structure had an overall thickness of about 1 mm wherein the thickness of L1* was of about 0.4 mm, the thickness of L2* was of about 0.3 mm and the thickness of L3* was of about 0.3 mm.The adhesion between all layers was excellent.

## Claims

1. Multilayer structure comprising at least one couple of adjacent layers (L1-L2), **characterized in that**:
- layer (L1) comprises at least one polymer composition (C1) comprising:
• from at least 50 wt.% to at most 95 wt.% of at least one semi-crystalline polyphthalamide having a melting temperature of at least 310°C and of at most 325°C, wherein said polyphthalamide is a polyterephthalamide comprising:
more than 55 mole% and at most 75 mole% of terephthalamide units based on the total number of moles of recurring units,
from at least 5 mole % to at most 40 mole % of isophthalamide units based on the total number of moles of recurring units, and
from at least 1 mole % to at most 20 mole % of aliphatic diacid-amide units based on the total number of moles of recurring units,
wherein said melting temperature is measured by Differential Scanning Calorimetry, wherein after preliminarily checking that the calorimeter is well-calibrated by means of a calibration sample, the polyphthalamide is submitted to the following heating/cooling cycle : 1 st heating from room temperature up to 350°C at a rate of 10°C/min, followed by cooling from 350°C down to room temperature at a rate of 20°C/min, followed by 2nd heating from room temperature up to 350°C at a rate of 10°C/min, and the melting temperature is measured during 2nd heating, whereas melting is an endothermic first-order transition that appears as a negative peak on the DSC scan and
• from at least 5 wt.% to at most 35 wt.% of at least one impact modifier (I1), based on the total weight of the polymer composition (C1),
- layer (L2) comprises at least one polymer composition (C2) comprising at least one functionalized polyolefin (FPO2) having a melting temperature of at least 120°C, when measured according to ISO 11357, said functionalized polyolefin comprising functional groups chosen from carboxylic groups, their esters, their anhydrides and their salts.

2. Multilayer structure according to claim 1, **characterized in that** layer (L1) consists essentially of polymer composition (C1).

3. Multilayer structure according to anyone of claims 1 or 2, **characterized in that** impact modifier (I1) is elastomeric.

4. Multilayer structure according to anyone of claims 1 to 3, **characterized in that** layer (L2) consists essentially of polymer composition (C2).

5. Multilayer structure according to anyone of the claims 1 to 4, **characterized in that** functionalized polyolefin (FPO2) is obtained by grafting at least one grafting agent (G2) onto at least one unfunctionalized polyolefin (PO2).

6. Multilayer structure according to claim 5, **characterized in that** unfunctionalized polyolefin (PO2) comprises at least 80 wt.% of ethylene recurring units with respect to the total weight of the recurring units.

7. Multilayer structure according to claim 5 or 6, **characterized in that** functionalized polyolefin (FPO2) has a melt flow index MI5 of at most 1.0 dg/min.

8. Multilayer structure according to anyone of claims 1 to 7, **characterized in that** it further comprises at least one layer (L3), adjacent to layer (L2), comprising at least one polymer composition (C3) comprising at least one unfunctionalized polyolefin (PO3).

9. Process for manufacturing the multilayer structure according to any one of claims 1 to 8, **characterized in that** it comprises co-extruding polymer compositions (C1) and (C2) so as to obtain couple (L1-L2) of adjacent layers (L1) and (L2).

10. Shaped article, **characterized in that** it comprises the multilayer structure according to anyone of claims 1 to 8.

11. Shaped article according to claim 10, **characterized in that** it is a hollow body chosen from the group of pipes, hoses, tubes, containers, fuel tanks and bottles.

12. Process for manufacturing the shaped article according to claim 10 or 11, **characterized in that** it comprises co-extruding polymer compositions (C1) and (C2) so as to obtain couple (L1-L2) of adjacent layers (L1) and (L2).

## Patentansprüche

1. Mehrschichtstruktur mit mindestens einem Paar von benachbarten Schichten (L1-L2), **dadurch gekennzeichnet, dass** :
- Schicht (L1) mindestens eine Polymerzusammensetzung (C1) umfasst, die :
• mindestens 50 Gew.% und höchstens 95 Gew. % von mindestens einem teilkristallinen Polyphthalamid mit einem Schmelzpunkt von 210 °C und höchstens 325°C umfasst, wobei das Polyphthalamid ein Terephthalamid, das :
mehr als 55 Mol- % und höchstens 75 Mol- % Terephthalamid-Einheiten,
bezogen auf die Gesamtzahl der Mole von wiederkehrenden Einheiten,
von mindestens 5 Mol- % bis höchstens 45 Mol- % isophthalamid-Einheiten, bezogen auf die Gesamtzahl der Mole von wiederkehrenden Einheiten,
und von mindestens 1 Mol- % bis höchstens 20 Mol- % aliphatische Disäure-Amideinheiten, bezogen auf die Gesamtzahl der Mole von wiederkehrenden Einheiten, umfasst,
wobei die Schmelztemperatur durch Diffenrezkalorimetrie gemessen wird, wobei, nachdem mit Hilfe einer Kalibrierungsprobe zuvor überprüft wird,
dass das Kalorimeter gut geeicht ist, das Polyphthalamid folgendem Heiz- / Kühlkreislauf unterworfen wird: Erste Aufheizung von Raumtemperatur bis auf 350°C bei einer Rate von 10°C/min, gefolgt von Abkühlen von 350°C herunter auf Raumtemperatur bei einer Rate von 20°C/min, , gefolgt von zweitem Aufheizen von Raumtemperatur bis auf 350°C bei einer Rate von 10°C/min, und die Schmelztemperatur während der 2. Aufheizkurve gemessen wird und wobei der Schmelzvorgang ein endothermer Übergang erster Ordnung ist, der als ein negativer Peak auf der DSC-Messung erscheint, und
• von mindestens 5 Gew % bis höchstens 35 Gew %, bezogen auf das Gesamtgewicht der Polymerzusammensetzung (C1), von mindestens einem Schlagzähigkeitsmodifikator (I1) umfasst, und
- Schicht (L2) mindestens eine Polymerzusammensetzung (C2) umfasst, die mindestens ein funktionalisiertes Polyolefin (FPO2) mit einem Schmelzpunkt von mindestens 120°C, gemessen nach ISO 11357, umfasst, wobei das funktionalisierte Polyolefin unter Carboxylgruppen, deren Estern, deren Anhydriden und deren Salzen ausgewählte funktionelle Gruppen umfasst.

2. Mehrschichtstruktur nach Anspruch 1, **dadurch gekennzeichnet, dass** die Schicht (L1) im Wesentlichen aus der Polymerzusammensetzung (C1) besteht.

3. Mehrschichtstruktur nach einem der Ansprüche 1 oder 2, **dadurch gekennzeichnet, dass** der Schlagzähigkeitsmodifikator (I1) elastomer ist.

4. Mehrschichtstruktur nach einem der Ansprüche 1 bis 3, **dadurch gekennzeichnet, dass** die Schicht (L2) im Wesentlichen aus der Polymerzusammensetzung (C2) besteht.

5. Mehrschichtstruktur nach einem der Ansprüche 1 bis 4, **dadurch gekennzeichnet, dass** das funktionalisierte Polyolefin (FPO2) durch Aufpropfen mindestens eines Pfropfmittels (G2) auf mindestens ein unfunktionalisiertes Polyolefin (PO2) erhalten wird.

6. Mehrschichtstruktur nach Anspruch 5, **dadurch gekennzeichnet, dass** das unfunktionalisierte Polyolefin (PO2) mindestens 80 Gew.- % Ethylen-Wiederholungseinheiten, bezogen auf das Gesamtgewicht der Wiederholungseinheiten, umfasst.

7. Mehrschichtstruktur nach Anspruch 5 oder 6, **dadurch gekennzeichnet, dass** das funktionalisierte Polyolefin (FPO2) einen Schmelzindex MI5 von höchstens 1,0 dg/min aufweist.

8. Mehrschichtstruktur nach einem der Ansprüche 1 bis 7, **dadurch gekennzeichnet, dass** sie ferner mindestens eine der Schicht (L2) benachbarte Schicht (L3) umfasst, die mindestens eine Polymerzusammensetzung (C3) umfasst, die mindestens ein unfunktionalisiertes Polyolefin (PO3) umfasst.

9. Verfahren zur Herstellung der Mehrschichtstruktur nach einem der Ansprüche 1 bis 8, **dadurch gekennzeichnet, dass** man die Polymerzusammensetzungen (C1) und (C2) coextrudiert, wobei man das Paar (L1-L2) von benachbarten Schichten (L1) und (L2) erhält.

10. Formkörper, **dadurch gekennzeichnet, dass** er die Mehrschichtstruktur nach einem der Ansprüche 1 bis 8 umfasst.

11. Formkörper nach Anspruch 10, **dadurch gekennzeichnet, dass** es sich um einen Hohlkörper aus der Gruppe Rohre, Schläuche, Röhren, Behälter, Brennstofftanks und Flaschen handelt.

12. Verfahren zur Herstellung des Formkörpers nach Anspruch 10 oder 11, **dadurch gekennzeichnet, dass** man die Polymerzusammensetzungen (C1) und (C2) coextrudiert, wobei man das Paar (L1-L2) von benachbarten Schichten (L1) und (L2) erhält.

## Revendications

1. Structure multicouche comprenant au moins un couple de couches adjacentes (L1-L2), **caractérisée en ce que** :
- la couche (L1) comprend au moins une composition de polymère (C1) comprenant :
• entre au moins 50 % en poids et au plus 95 % en poids d'au moins un polyphtalamide semi-cristallin ayant une température de fusion de au moins 310°C et d'au plus 325°C, dans laquelle ledit polyphtalamide est un polyterephthalamide comprenant
plus de 55 % en moles et au plus 75 % en moles de motifs récurrents téréphtalamide par rapport au nombre total de moles de motifs récurrents, entre au moins 5 % en moles et au plus 40 % en moles de motifs récurrents isophthalamide par rapport au nombre total de moles de motifs récurrents,
et
entre au moins 1 % en moles et au plus 20 % en moles de motifs diacide-amide aliphatiques, par rapport au nombre total de moles de motifs récurrents,
dans laquelle ladite température de fusion est mesurée par Calorimétrie Différentielle à Balayage (DSC), dans laquelle après avoir vérifié au préalable que le calorimètre est bien étalonné au moyen d'un échantillon d'étalonnage, le polyphthalamide est soumis au cycle de chauffage/refroidissement suivant : 1^{èr} chauffage de la température ambiante jusqu'à 350°C à une vitesse de 10°C/min, suivi par un refroidissement de 350°C jusqu'à la température ambiante à une vitesse de 20°C/min, suivi par un deuxième chauffage jusqu'à 350°C à une vitesse de 10°C/min, et la température de fusion est mesurée pendant le deuxième chauffage, dans laquelle la température de fusion est la transition endothermique de premier ordre qui apparait comme un pic négatif dans le balayage DSC, et
• entre au moins 5 % en poids et au plus 35 % en poids, par rapport au poids total de la composition de polymère (C1), d'au moins un modificateur de résistance au choc (I1), et
- la couche (L2) comprend au moins une composition de polymère (C2) comprenant au moins une polyoléfine fonctionnalisée (FPO2) ayant une température de fusion d'au moins 120°C, lorsqu'elle est determinnée selon ISO 11357, ladite polyoléfine fonctionnalisée comprenant des groupes fonctionnels choisis parmi les groupes carboxyliques, leurs esters, leurs anhydrides et leurs sels.

2. Structure multicouche selon la revendication 1, **caractérisée en ce que** la couche (L1) est essentiellement constituée de la composition de polymère (C1).

3. Structure multicouche selon l'une quelconque des revendications 1 ou 2, **caractérisée en ce que** le modificateur de résistance au choc (I1) est élastomère.

4. Structure multicouche selon l'une quelconque des revendications 1 à 3, **caractérisée en ce que** la couche (L2) est essentiellement constituée de la composition de polymère (C2).

5. Structure multicouche selon l'une quelconque des revendications 1 à 4, **caractérisée en ce que** la polyoléfine fonctionnalisée (FPO2) est obtenue par greffage d'au moins un agent de greffage (G2) sur au moins une polyoléfine non fonctionnalisée (PO2).

6. Structure multicouche selon la revendication 5, **caractérisée en ce que** la polyoléfine non fonctionnalisée (PO2) comprend au moins 80 % en poids de motifs récurrents éthylène par rapport au poids total des motifs récurrents.

7. Structure multicouche selon la revendication 5 ou 6, **caractérisée en ce que** la polyoléfine fonctionnalisée (FPO2) possède un indice de fluidité à chaud MI5 d'au plus 1,0 dg/min.

8. Structure multicouche selon l'une quelconque des revendications 1 à 7, **caractérisée en ce qu'**elle comprend en outre au moins une couche (L3), adjacente à la couche (L2), comprenant au moins une composition de polymère (C3) comprenant au moins une polyoléfine non fonctionnalisée (PO3).

9. Procédé de fabrication de la structure multicouche selon l'une quelconque des revendications 1 à 8, **caractérisé en ce qu'**il comprend la co-extrusion des compositions de polymère (C1) et (C2) de manière à obtenir le couple (L1-L2) de couches adjacentes (L1) et (L2).

10. Article façonné, **caractérisé en ce qu'**il comprend la structure multicouche selon l'une quelconque des revendications 1 à 8.

11. Article façonné selon la revendication 10, **caractérisé en ce qu'**il est un corps creux choisi dans le groupe constitué par les canalisations, les tuyaux, les tubes, les récipients, les réservoirs de carburant et les bouteilles.

12. Procédé de fabrication de l'article façonné selon la revendication 10 ou 11, **caractérisé en ce qu'**il comprend la co-extrusion des compositions de polymère (C1) et (C2) de manière à obtenir le couple (L1-L2) de couches adjacentes (L1) et (L2).
